# EUROPÄISCHE PATENTANMELDUNG

(11) **EP 4 748 760 A1**
(43) Veröffentlichungstag der Anmeldung: **27.05.2026**
(21) Anmeldenummer: 25218011.2
(22) Anmeldetag: 24.11.2025
(51) Int. Cl.: B65G 47/252, B65G 47/84

(54) **WENDESTERN**

(30) Priorität: 26.11.2024 DE 102024134754
(71) Anmelder: Körber Pharma Inspection GmbH, 85570 Markt Schwaben (DE)
(72) Erfinder: Enninger, Stephan, 85570 Markt Schwaben (DE); Mayr, Andreas, 85570 Markt Schwaben (DE); Baumgartner, Hans, 85570 Markt Schwaben (DE)
(74) Vertreter: Müller Schupfner & Partner Patent- und Rechtsanwaltspartnerschaft mbB (Muc)

(57) **Zusammenfassung**

Es wird ein Wendestern (1) zum Wenden von medizinischen Behältern (2) bereitgestellt. Der Wendestern (1) umfasst: ein Basiselement (3), an dem eine Vielzahl von Wendeelementen (4) vorgesehen ist, wobei jedes Wendeelement (4) umfasst: ein Halteelement (41), das dazu ausgestaltet ist, einen medizinischen Behälter (2) zu halten und zu wenden, ein erstes Kontaktelement (42), das dazu ausgestaltet ist, mit einer ersten Steuerkurve (5) in Kontakt zu gelangen, wobei das Wendeelement (4) dazu ausgestaltet ist, sich abhängig von der ersten Steuerkurve (5) relativ zu dem Basiselement (3) zwischen einer ersten Position und einer zweiten Position zu verlagern. Ferner wird ein Verfahren zum Wenden von medizinischen Behältern (2) bereitgestellt.

## Beschreibung

Die vorliegende Offenbarung betrifft einen Wendestern zum Wenden von medizinischen Behältern sowie ein Verfahren zum Wenden von medizinischen Behältern.

Während Inspektionsprozessen von medizinischen Behältern ist es oft notwendig, die Behälter zu drehen, um eine Inspektion des vollständigen Behälters durchführen zu können. Ferner können durch ein Wenden der medizinischen Behälter darin vorhandene und an der Behälterinnenwand anhaftende Fluidbläschen durch das Fluid abgedeckt werden. Nichtsdestotrotz darf ein medizinischer Behälter, der ein Fluid enthält, nicht zu schnell gedreht werden, da dadurch übermäßig viel Luftbläschen erzeugt werden könnten, was später zu Problemen bei der Inspektion führen kann. Durch den gesteigerten Bedarf an medizinischen Produkten ist es zudem ein Ziel, möglichst viele medizinische Behälter in kurzer Zeit inspizieren zu können.

Daher ist es eine Aufgabe der vorliegenden Offenbarung eine Vorrichtung und ein Verfahren bereitzustellen, bei dem medizinische Behälter sicher, zuverlässig und schnell, insbesondere für eine Inspektion, gewendet werden können. Diese Aufgabe wird mit einer Vorrichtung mit den Merkmalen des Anspruchs 1 sowie mit einem Verfahren mit den Merkmalen des Anspruchs 15 gelöst. Vorteilhafte Ausgestaltungen sind in den abhängigen Ansprüchen angegeben.

Gemäß einem Aspekt der vorliegenden Offenbarung wird ein Wendestern zum Wenden von medizinischen Behältern bereitgestellt. Der Wendestern kann ein Basiselement umfassen, an dem eine Vielzahl von Wendeelementen vorgesehen ist. Jedes Wendeelement kann ein Halteelement, das dazu ausgestaltet ist, einen medizinischen Behälter zu halten und zu wenden, und ein erstes Kontaktelement, das dazu ausgestaltet ist, mit einer ersten Steuerkurve in Kontakt zu gelangen, umfassen. Das Wendeelement kann dazu ausgestaltet sein, sich abhängig von der ersten Steuerkurve relativ zu dem Basiselement zwischen einer ersten Position und einer zweiten Position zu verlagern.

Gegenüber dem bekannten Stand der Technik bietet der Gegenstand der vorliegende Offenbarung den Vorteil, dass medizinische Behälter mit einem kompakten Wendestern gewendet werden können. Gegenüber einem bekannten mehrteiligen Wendeturm weist der oben genannte Wendestern einen erheblich geringeren Platzbedarf auf. Durch die Verlagerung zwischen der ersten Position und der zweiten Position können die medizinischen Behälter so bewegt werden, dass aneinander angrenzende Behälter bei einer Drehung bzw. Wendung nicht miteinander kollidieren. Dadurch kann eine enge Teilung von mindestens 12-mal π bereitgestellt sein, was den Durchsatz bei gleichzeitiger Reduzierung des Platzbedarfs erhöht.

Der Wendestern kann ein Instrument oder Laborinstrument sein, welches genutzt wird, um medizinische Behälter zu transportieren und/oder zu handhaben. Insbesondere kann der Wendestern ausschließlich im medizinischen Umfeld nutzbar sein. Mit anderen Worten kann er gerade nicht in anderen Bereichen wie der Abfüllung von Getränken oder einem Verlagern von Halbzeugen genutzt werden. Der Wendestern kann dazu besonders hinsichtlich hygienischer Anforderungen ausgestaltet sein. Ein Wendestern kann eine Vielzahl von medizinischen Behältern transportieren. Der medizinische Behälter kann an einem Übergabepunkt an den Wendestern übergeben werden und an einem Abgabepunkt von dem Wendestern abgegeben werden. Ein medizinischer Behälter kann nur über eine Teilstrecke entlang des Umfangs des Wendesterns transportiert werden. Der Wendestern kann im Wesentlichen kreisförmig ausgestaltet sein. Ein medizinischer Behälter kann eine Spritze, eine Viole, eine Küvette, eine Injektionsflasche, Ampullen oder andere medizinische Behälter umfassen. Medizinische Behälter haben üblicherweise ein geringes Volumen und hohe hygienische Standards. Die medizinischen Behälter umfassen Glas oder können vollständig aus Glas gebildet sein und können daher zerbrechlich sein. Folglich ist bei der Handhabung der medizinischen Behälter eine hohe Sorgfalt geboten. In den medizinischen Behältern kann ein Fluid aufgenommen sein. Bei einer Inspektion der medizinischen Behälter kann das Fluid auf Verunreinigungen untersucht werden. Ferner kann bei der Inspektion der medizinischen Behälter auch Beschädigungen der medizinischen Behälter erkannt werden. Das Basiselement des Wendesterns kann ein zentrales Teil des Wendesterns darstellen. Optional ist der Wendestern an seinem Basiselement drehbar festgelegt. Das Basiselement kann ein kreisförmiges Element sein. Das Basiselement kann ein plattenartiges kreisförmiges Element sein, welches um eine Achse drehbar ist. An dem Basiselement können eine Vielzahl von Wendeelementen vorgesehen sein. Die Wendeelemente können relativ zu dem Basiselement verlagerbar sein. Dadurch kann eine hohe individuelle Handhabung einzelner medizinischer Behälter durch die beweglichen Wendeelemente gewährleistet sein. Es können eine Vielzahl von Wendeelementen an dem Umfang des Basiselements vorgesehen sein. Die Wendeelemente können angrenzend aneinander an dem Basiselement festgelegt sein. Dadurch ist es möglich, eine Vielzahl von Wendeelementen an dem Basiselement vorzusehen. Jedes Wendeelement kann ein Halteelement aufweisen. Damit kann an dem Basiselement eine Vielzahl von Halteelementen über die Vielzahl von Wendeelementen angeordnet sein. Das Halteelement kann dazu ausgestaltet sein, jeweils einen medizinischen Behälter zu halten. Optional kann jedes Halteelemente ausschließlich einen medizinischen Behälter halten. Halten kann hierbei bedeuten, dass das Halteelement dazu ausgestaltet ist, einen medizinischen Behälter zu greifen und festzuhalten. Optional kann das Halteelement dazu ausgestaltet sein, einen medizinischen Behälter während einer Verlagerung desselben festzulegen. Dadurch ist es möglich, einen medizinischen Behälter im Raum zu verlagern. Ferner kann das Halteelement dazu ausgestaltet sein, den medizinischen Behälter zu wenden. Wenden kann hierbei bedeuten, dass der medizinische Behälter um eine Achse gedreht bzw. gewendet wird. Das Kontaktelement kann einen Teil des Wendeelements sein, das dazu ausgestaltet ist mit einer Steuerkurve in Kontakt zu gelangen. In Kontakt kann hierbei bedeuten, dass das Kontaktelement direkt mit der Steuerkurve kontaktiert. Das Kontaktelement kann die Steuerkurve also berühren. Dadurch kann das Kontaktelement einem Verlauf der Steuerkurve folgen, wenn das Kontaktelement und die Steuerkurve relativ zueinander bewegt werden. Das Kontaktelement kann dabei so ausgestaltet sein, dass eine Reibung zwischen der Steuerkurve und dem Kontaktelement minimiert ist. Dadurch kann eine Wärmeerzeugung und ein Energieverlust vermieden werden, wodurch ein effizienter Betrieb des Wendesterns ermöglicht ist. Das Wendeelement ist dazu ausgestaltet, sich von einer ersten Position in eine zweite Position zu bewegen. Die Bewegung zwischen der ersten Position und der zweiten Position kann durch die Steuerkurve bedingt bzw. gesteuert sein. Mit anderen Worten kann sich das Wendeelement dann von der ersten Position in die zweite Position verlagern, wenn die Steuerkurve das Kontaktelement so kontaktiert, dass das Wendeelement in die zweite Position überführt wird. Ferner ist es denkbar, dass die Steuerkurve auch eine Überführung von der zweiten Position zurück in die erste Position steuert. Die Steuerkurve kann auch als Laufkurve bezeichnet sein. Die Steuerkurve kann eine Kontaktfläche bzw. eine Kontur definieren, an die das Kontaktelement zur Anlage kommen kann, sodass das Kontaktelement bei einer Relativbewegung zwischen Kontaktelement und Steuerkurve entlang der Steuerkurve bewegt wird und dabei durch die Steuerkurve im Raum positioniert wird. Somit kann also abhängig von einer Steuerkurve ein Wendeelement relativ zu dem Basiselement bewegt werden. Dadurch können zwei aneinander angrenzenden Wendeelemente so versetzt zueinander bewegt werden, dass medizinische Behälter, die an dem Wendeelement festgelegt sind, gewendet werden können, ohne benachbarte Wendeelemente oder medizinische Behälter zu kontaktieren. Dadurch müssen die einzelnen Wendeelemente nicht mehr so weit auseinander entlang des Umfangs des Basiselements angeordnet sein, dass medizinische Behälter problemlos gewendet werden können, sondern können dicht an dicht (beispielsweise aneinander angrenzend) am Umfang des Basiselements festgelegt werden, da es möglich ist, jedes Halteelement vor einem Wenden des daran gehaltenen medizinischen Behälters von der ersten Position in die zweite Position zu bringen, sodass das Wenden des medizinischen Behälters problemlos möglich ist. Optional erfolgt ein Verlagern des Wendeelements von der ersten Position in die zweite Position bei aneinander angrenzenden Wendeelementen nacheinander. Mit anderen Worten kann die Verlagerung zwischen der ersten Position und der zweiten Position sequenziell erfolgen. Dadurch kann sichergestellt sein, dass aneinander angrenzende Wendeelemente bzw. die daran gehaltenen medizinischen Behälter andere Wendeelemente oder andere medizinische Behälter nicht kontaktieren. Dadurch kann die Vielzahl der Wendeelemente dichter beieinander an dem Basiselement angeordnet sein, wodurch der Durchsatz an medizinischen Behältern gesteigert sein kann.

Optional ist das Basiselement um eine erste Achse drehbar. Die erste Achse kann also im Wesentlichen orthogonal auf dem Basiselement stehen. Somit können sich die Wendeelemente, die an dem Basiselement festgelegt sind, ebenfalls um die erste Achse drehen. Der Umfang des Basiselements, an welchen die Wendeelemente festgelegt sind, kann orthogonal zu der ersten Achse angeordnet sein.

Optional sind die Vielzahl von Wendeelementen an dem Basiselement angeordnet. Die Wendeelemente können lösbar an dem Basiselement angeordnet sein. Dadurch können die Wendeelemente problemlos ausgewechselt werden. Dies erleichtert die Wartung und verringert die Stillstandzeit.

Optional ist das Basiselement im Wesentlichen kreisförmig ausgebildet. Damit kann ein Umfang definiert werden, der an allen Punkten denselben Abstand vom Mittelpunkt hat und damit dieselbe Umlaufgeschwindigkeit um den Mittelpunkt des Basiselements. Dadurch kann sichergestellt sein, dass jedes Wendeelement ebenfalls dieselbe Umlaufgeschwindigkeit aufweist.

Optional sind die Wendeelemente lösbar an dem Basiselement gehalten. Dadurch kann jedes Wendeelement problemlos ausgetauscht werden. Dadurch kann auf einfache Art und Weise ein Format der zu transportierenden medizinischen Behälter geändert werden.

Optional erfolgt die Verlagerung des Wendeelements relativ zu dem Basiselement. Mit anderen Worten kann das Wendeelement von dem Basiselement weg oder darauf zu bewegt werden. Wichtig ist, dass die Wendeelemente in eine andere Anordnung gelangen, die sich von daran angrenzenden Wendeelementen unterscheidet. Dadurch kann sichergestellt sein, dass der medizinische Behälter problemlos gewendet werden kann, ohne daran angrenzende Wendeelemente oder medizinische Behälter zu kontaktieren.

Optional ist die zweite Position weiter von dem Basiselement entfernt als die erste Position. Mit anderen Worten kann das Wendeelement bei einer Verlagerung zwischen der ersten Position und der zweiten Position von dem Basiselement wegbewegt werden. Dadurch kann ein größerer Raum geschaffen werden, indem es möglich ist, den medizinischen Behälter zu wenden. Insbesondere bei einem kreisförmigen Basiselement ist es vorteilhaft, dass das Wendeelement bei einer Verlagerung zwischen der ersten Position und der zweiten Position von dem Basiselement wegbewegt wird, da dadurch ein größerer Bereich zum Wenden des medizinischen Behälters geschaffen wird.

Optional ist das Wendeelement zwischen der ersten Position und der zweiten Position translatorisch verlagerbar. Mit anderen Worten kann das Wendeelement von der ersten Position in die zweite Position verschoben werden. Somit kann es keine Drehung des Wendeelements zwischen der ersten Position und der zweiten Position geben. D. h. das Wendeelement wird zwischen der ersten Position und der zweiten Position entlang einer Geraden verlagert. Dadurch kann eine Steuerung durch die Steuerkurve vereinfacht sein.

Optional ist die zweite Position in einer Radialrichtung des Basiselements weiter von dem Basiselement entfernt als in der ersten Position. Mit anderen Worten ist es bevorzugt, dass bei einem runden Basiselement das Wendeelement in einer Radialrichtung nach außen bewegt wird. Dadurch kann eine optimale sequenzielle Verlagerung der Wendeelemente an dem Basiselement erreicht werden. Ferner ist die Steuerung durch die Steuerkurve vereinfacht möglich.

Optional ist die Position des Wendeelements relativ zu dem Basiselement abhängig von einer Umfangsposition des Wendeelements entlang eines Umfangs des Basiselements. Mit anderen Worten kann die Steuerkurve feststehen und das Basiselement kann sich relativ zu der Steuerkurve drehen. Die Wendeelemente sind an dem Basiselement festgelegt, sodass sich diese zusammen mit dem Basiselement drehen können. Somit können die Wendeelemente entlang der Steuerkurve bewegt werden. Da die Steuerkurve relativ zu dem Basiselement feststehend ist, kann die Frage, ob ein Wendeelement sich in der ersten Position oder in der zweiten Position befindet, davon abhängen, wo sich das Wendeelement entlang des Umfangs des Basiselements befindet. So können die Wendeelemente in einem absoluten Koordinatensystem gesehen immer an derselben Stelle von der ersten Position in die zweite Position verlagert werden. Mit anderen Worten können die Wendeelemente immer an derselben Stelle relativ zu dem Basiselement verlagert werden.

Optional weist das Wendeelement ein zweites Kontaktelement auf, das dazu ausgestaltet ist, mit einer zweiten Steuerkurve in Kontakt zu gelangen. Das zweite Kontaktelement kann analog zu dem ersten Kontaktelement ausgestaltet sein. Das zweite Kontaktelement kann dazu ausgestaltet sein, eine weitere Steuerinformation von einer zweiten Steuerkurve aufzunehmen. Dadurch kann eine weitere Funktionalität des Wendeelements durch eine Steuerkurve gesteuert werden. Im Übrigen liefert die zweite Steuerkurve dieselben grundsätzlichen Vorteile wie die erste Steuerkurve.

Optional ist das zweite Kontaktelement dazu ausgestaltet, eine Drehung des Halteelements zu steuern. Mit anderen Worten kann somit auch die Drehung bzw. Wendung des medizinischen Behälters abhängig von einer Position des Wendeelements entlang des Umfangs des Basiselements gesteuert sein. So kann beispielsweise die erste Steuerkurve und die zweite Steuerkurve so relativ zueinander angeordnet sein, dass die erste Steuerkurve veranlasst, dass das Wendeelement so zwischen der ersten Position und der zweiten Position verlagert wird, dass Raum für eine Wendung des medizinischen Behälters geschaffen ist. Ist das Wendeelement bei der Verlagerung zwischen der ersten Position und der zweiten Position oder in der zweiten Position, kann die zweite Steuerkurve so ausgestaltet sein, dass durch das zweite Kontaktelement eine Wendung bzw. eine Rotation des medizinischen Behälters initiiert wird. Somit kann eine abhängige Steuerung auf einfache Art und Weise erreicht werden. Ferner kann so eine zuverlässige Steuerung erreicht werden. Dies ist wichtig, um Fehlsteuerung zu vermeiden, bei denen beispielsweise ein medizinischer Behälter gewendet wird, obwohl er mit einem angrenzenden Element kontaktieren würde und damit Schaden nehmen würde. Dies liefert gegenüber einer elektronischen Steuerung erhebliche Vorteile, da aufgrund der Abhängigkeiten der ersten Steuerkurve und der zweiten Steuerkurve sichergestellt ist, dass der medizinische Behälter nur dann gewendet wird, wenn dies auch problemlos möglich ist.

Optional ist das zweite Kontaktelement von dem ersten Kontaktelemente beabstandet voneinander an dem Wendeelement angeordnet. Dadurch kann sichergestellt sein, dass das erste Kontaktelement und das zweite Kontaktelement sich gegenseitig nicht einschränken. Ferner könnten die Steuerkurven so ausgestaltet und angeordnet sein, dass eine zufriedenstellende Kontaktfläche zwischen dem Kontaktelement und der jeweiligen Steuerkurve gewährleistet ist. Dadurch kann eine unabhängige Steuerung des ersten Kontakteelements und des zweiten Kontaktelements durch die erste Steuerkurve sowie die zweite Steuerkurve erfolgen.

Optional weist das Wendeelement ein Rückstellelement auf, das dazu ausgestaltet ist, das Wendeelement in die erste Position zu drängen. Somit kann, wenn die Steuerkurve das erste Kontaktelement nicht mehr kontaktiert, sodass das Wendeelemente in die zweite Position gedrängt wird, das Wendeelement automatisch in die erste Position zurückkehren. Dadurch kann sichergestellt sein, dass das erste Kontaktelement immer stets Kontakt mit der ersten Steuerkurve hat. Mit anderen Worten kann das Rückstellelement dazu ausgestaltet sein, das Kontaktelement an die erste Steuerkurve zu drücken. Somit kann sichergestellt sein, dass das erste Kontaktelement stets der Kontur der ersten Steuerkurve folgt. Dadurch kann eine feine Steuerung des Wendeelements gewährleistet sein. Ferner ist es nicht notwendig, eine Vorrichtung an der Steuerkurve vorzusehen, die dafür sorgt, dass das Wendeelement von der zweiten Position in die erste Position zurückkehrt. Das Rückstellelement kann beispielsweise eine Feder sein. Ferner kann das Rückstellelement in Elastomerelement sein, welches dazu ausgestaltet ist, eine Rückstellkraft auf das Wendeelement auszuüben.

Optional weist das Wendeelement zumindest ein Führungselement auf, das dazu ausgestaltet ist, das Wendeelement zwischen der ersten Position und der zweiten Position zu führen. Dadurch kann verhindert werden, dass das Wendeelement ausgelenkt wird und hierbei von einem gewollten Verlagerungspart zwischen der ersten Position und der zweiten Position abweicht. Das Führungselement kann beispielsweise eine Führungsstange sein, entlang der das Wendeelement gleiten kann. Dadurch kann die translatorische Bewegung sichergestellt sein. Ferner kann durch Führungselement sichergestellt sein, dass selbst bei hohen Drehgeschwindigkeiten des Wendesterns eine optimale Führung des Wendeelements zwischen der ersten Position und der zweiten Position gewährleistet ist.

Optional unterscheidet sich die erste Steuerkurve von der zweiten Steuerkurve hinsichtlich Anordnung und/oder Form. Mit anderen Worten kann die erste Steuerkurve einen anderen Steuerbefehl im Vergleich zu der zweiten Steuerkurve geben. Die erste Steuerkurve kann hierbei identisch ausgestaltet sein, wie die zweite Steuerkurve und lediglich unterschiedlich angeordnet sein. Genauer gesagt kann die Steuerkurve eine im Wesentlichen kreisförmige Außenkontur haben, an der an zumindest einer Stelle eine Ausbeulung oder ein anderer Konturverlauf vorgesehen ist. Dadurch kann das erste Kontaktelement, welches kontinuierlich mit der Kontaktfläche der ersten Steuerkurve in Kontakt steht, an einer bestimmten Stelle aktiviert bzw. verlagert werden. Die zweite Steuerkurve kann hierbei identisch ausgestaltet sein. In diesem Fall kann die zweite Steuerkurve leicht versetzt zu der ersten Steuerkurve angeordnet sein. Sind die Steuerkurven im Wesentlichen rund ausgestaltet, kann die Ausbeulung oder andere Kontur der zweiten Steuerkurve versetzt zu der Ausbeulung oder anderen Kontur der ersten Steuerkurve angeordnet sein. Somit kann das erste Kontaktelement und das zweite Kontaktelement unterschiedlich gesteuert werden. Dies ist insbesondere dann vorteilhaft, wenn das erste Kontaktelement für eine Verlagerung des Wendeelements zuständig ist, wobei das zweite Kontaktelement für eine Wendung oder Drehung des an dem Wendeelement gehaltenen medizinischen Behälters zuständig ist. Beispielsweise kann so definiert werden, dass die Wendung bzw. Drehung des medizinischen Behälters erst dann erfolgt, wenn das Wendeelement verlagert ist. Dadurch kann eine einfache und ausfallsichere Steuerung bereitgestellt sein.

Optional ist das erste Basiselement relativ zu der ersten Steuerkurve und/oder der zweiten Steuerkurve beweglich ausgebildet. Mit anderen Worten kann eine Relativbewegung zwischen der ersten Steuerkurve und/oder der zweiten Steuerquote beweglich sein. Optional stehen die erste Steuerkurve und die zweiten Steuerkurve fest, wohingegen sich das Basiselement relativ dazu bewegt, insbesondere dreht. Da die Wendeelemente an dem Basiselement festgelegt sind, kann das Basiselement die Wendeelemente entlang der Steuerkurve bewegen, sodass das erste Kontaktelement und/oder das zweite Kontaktelement mit einer zugeordneten Steuerkurve in Kontakt gelangt.

Optional verlaufen die erste Steuerkurve und/oder die zweite Steuerkurve kontinuierlich.

Mit anderen Worten können die Steuerkurven so ausgestaltet sein, dass das Kontaktelement stets in Kontakt mit der jeweiligen Steuerkurve ist. Mit anderen Worten können keine Löcher und keine Aussparungen in der Steuerkurve vorgesehen sein. Dies bietet den Vorteil, dass bei einem Verschleiß der Kontaktflächen eine einfache Anpassung an einen verschlissenen Zustand möglich ist, wohingegen bei einer Aussparung der neue Kontakt jedes Mal zu Problemen führen kann, wenn es hier zu Verschleiß kommt.

Optional weist das erste Kontaktelement und/oder das zweite Kontaktelement ein Rollenelement auf, das dazu ausgestaltet ist, mit der ersten Steuerkurve und/oder mit der zweiten Steuerkurve in Kontakt zu gelangen. Durch das Rollenelement kann ein Verschleiß der Steuerkurve bzw. des Kontaktelements verringert werden, da die Reibung zwischen den sich relativ zueinander bewegenden Kontaktpartnern verringert sein kann. Hierbei kann eine Drehachse des Rollenelements parallel zu der ersten Achse sein, um welche sich das Basiselement dreht. Daher kann der Wendestern länger betrieben werden, ohne dass eine Wartung notwendig ist.

Optional sind die ersten Kontaktelemente von zwei aneinander angrenzenden Wendeelementen an unterschiedlichen Positionen der Wendeelemente angeordnet. Die Position des Kontaktelements an dem Wendeelement kann bestimmen, mit welcher Steuerkurve das Kontaktelement in Kontakt gelangt. Sind beispielsweise zwei Kontaktelemente von aneinander angrenzenden Wendeelementen derselben Steuerkurve zugeordnet, so werden sich die 2 aneinander angrenzenden Wendeelemente synchron zueinander bewegenden. Sind jedoch die Kontaktelemente von zwei aneinander angrenzenden Wendeelementen unterschiedlichen Steuerkurven zugeordnet, so ist eine unabhängige Steuerung der beiden Wendeelemente möglich. Mit anderen Worten können die beiden aneinander angrenzenden Wendeelemente unterschiedlich bewegt werden. Dadurch kann beispielsweise erreicht werden, dass das eine Wendeelement bereits von der ersten Position in die zweite Position verlagert ist, wohingegen die angrenzenden Wendeelemente sich nach wie vor in der ersten Position befinden. Dadurch kann ein Abstand zwischen den Wendeelementen, welche sich in der ersten Position und in der zweiten Position befinden, und aneinander angrenzen, vergrößert werden, wodurch der Platz für das Wenden von medizinischen Behältern gesteigert ist. Dadurch kann durch die unterschiedliche Anordnung der Kontaktelemente an dem Wendeelement erreicht werden, dass aneinander angrenzenden Wendeelemente unterschiedlichen Steuerkurven zugeordnet sind, wodurch ein Platz zum Wenden der medizinischen Behältern gesteigert sein kann, da aneinander angrenzende Wendeelemente sich unterschiedlich verlagern lassen.

Optional ist die erste Steuerkurve so ausgestaltet, dass zwei aneinander angrenzenden Wendeelemente an unterschiedlichen Positionen zwischen der ersten Position und der zweiten Position angeordnet sind. Mit anderen Worten kann dadurch sichergestellt sein, dass aneinander angrenzende Wendeelemente sich bei einer Bewegung zwischen der ersten Position und der zweiten Position nicht an der gleichen Position befinden. Dadurch können Kollisionen auf sichere Art und Weise verhindert werden.

Optional ist die zweite Steuerkurve dazu ausgestaltet, dass zwei aneinander angrenzende Halteelemente an unterschiedlichen Drehposition zwischen der ersten Drehposition und der zweiten Drehposition angeordnet sind. Analog zu dem obigen kann dadurch sichergestellt sein, dass aneinander angrenzende Wendeelemente, die daran festgelegten medizinischen Behälter nicht zur gleichen Zeit wenden bzw. drehen, sodass eine Kollision der medizinischen Behälter verhindert sein kann.

Optional ist das Halteelement dazu ausgestaltet, den medizinischen Behälter in der zweiten Position zu wenden. Mit anderen Worten kann das Halteelement, wenn sich das Wendeelement in der zweiten Position befindet, den medizinischen Behälter wenden bzw. drehen oder rotieren. Dadurch kann bei einer Situation, in der genügend Platz zur Verfügung steht, der medizinische Behälter, welcher an einem Halteelemente gehalten ist, gewendet werden. Hierbei kann die Wendung erfolgen, ohne dass es zu Kontakt oder Beeinträchtigungen von angrenzend angeordneten Elementen oder anderen medizinischen Behältern kommt.

Optional ist das Halteelemente dazu ausgestaltet, einen medizinischen Behälter mittels Unterdruck zu halten. Dadurch kann eine besonders schonende Handhabung der medizinischen Behälter bereitgestellt sein. Insbesondere kann eine Übergabe der medizinischen Behälter an den Wendestern vereinfacht sein, da der Wendestern durch Anlegen eines Unterdrucks den medizinischen Behälter auf einfache Art und Weise übernehmen und dann halten kann. Ferner kann durch Anpassen des Unterdrucks auf unterschiedliche medizinische Behälter bzw. unterschiedliche Gewichte der medizinischen Behälter Rücksicht genommen werden, sodass eine Vielzahl von medizinischen Behältern transportiert werden kann.

Optional können Doppelsauger eingesetzt werden. Dies bietet den Vorteil, dass Standardbauteile verwendet werden können. Insbesondere bei höheren Behältern ist es möglich, zwei Sauger anzubringen, um die Haltekraft zu verdoppeln und günstigere Abstände zum Schwerpunkt des jeweiligen Behälters zu erzielen.

Optional ist das Halteelemente dazu ausgestaltet, einen an dem Halteelement gehaltenen medizinischen Behälter zwischen einer ersten Drehposition und einer zweiten Drehposition drehend zu verlagern. Mit anderen Worten kann ein Drehbehälter beispielsweise mit einer Öffnung nach oben gerichtet dem Wendestern zugeführt werden, durch den Wendestern um im Wesentlichen 180° gedreht werden, sodass der Boden des medizinischen Behälters nach oben zeigt und dann von dem Wendestern abgegeben werden. Die erste Drehposition kann dabei die Ausgangsposition darstellen. Die zweite Drehposition kann dabei die Zielposition, in welche der medizinische Behälter gebracht werden soll, darstellen. Während der medizinische Behälter an dem Halteelemente gehalten ist, kann dieser von der ersten Drehposition zu der zweiten Drehposition verlagert werden. Diese Verlagerung kann kontinuierlich oder sequenziell erfolgen. Die Verlagerung zwischen der ersten Drehposition und der zweiten Drehposition kann erfolgen, solange sich das Wendeelement zusammen mit dem Basiselement um die erste Achse herumdreht. Dadurch kann eine räumliche Verlagerung des medizinischen Behälters sowie eine Orientierung des medizinischen Behälters gleichzeitig ändern. Dadurch kann eine effiziente Handhabung des medizinischen Behälters bereitgestellt sein.

Optional ist eine Drehung zwischen der ersten Drehposition und der zweiten Drehposition des medizinischen Behälters eine Drehung um im Wesentlichen 180°. Da es bei der Handhabung von medizinischen Behältern häufig wichtig ist, die Orientierung des medizinischen Behälters so zu ändern, dass ein Boden des medizinischen Behälters in der Schwererichtung nach oben zeigt, ist es vorteilhaft, dass der Wendestern den medizinischen Behälter um 180° drehen kann. Dadurch ist eine nachfolgende Inspektion des medizinischen Behälters vorteilhaft möglich.

Optional verläuft die zweite Achse orthogonal zu der ersten Achse. Die zweite Achse kann hierbei die Achse sein, um die der medizinische Behälter zwischen der ersten Drehposition und der zweiten Drehposition gewendet bzw. gedreht wird. Die erste Achse kann die Achse sein, um die das Basiselement rotiert. Dadurch dass die zweite Achse orthogonal zu der ersten Achse verläuft, kann ein leicht steuerbares Gesamtsystem geschaffen werden, welches vorteilhaft betrieben werden kann. Ferner kann sich die zweite Achse radial zu dem Basiselement erstrecken. Genauer gesagt kann die zweite Achse stets durch den Mittelpunkt des Basiselements (d.h. die erste Achse schneiden) verlaufen. Damit kann gemeint sein, dass unabhängig der Position des Wendeelements, die zweite Achse immer die erste Achse schneidet. Somit können beide Achsen nicht windschief zueinander sein. Damit kann der technische Effekt erreicht werden, dass die Wendeelemente möglichst wenig bewegt werden, so dass die Geschwindigkeit des Wendens der medizinischen Behälter erhöht ist.

Optional ist das Halteelemente dazu ausgestaltet, während einer Verlagerung des Wendeelements von der ersten Position in die zweite Position, den an dem Halteelemente gehaltenen medizinischen Behälter zwischen der ersten Drehposition und der zweiten Drehposition zu verlagern. Mit anderen Worten kann der medizinische Behälter bereits bei einer Verlagerung zwischen der ersten Drehposition und der zweiten Drehposition des Wendeelements zwischen der ersten Drehpositionen und der zweiten Drehposition verlagert werden. Dadurch dass das Wenden des medizinischen Behälters bereits während der Verlagerung des Wendeelements weg von dem Basiselement erfolgt, kann der Wendevorgang zügiger abgeschlossen sein. Da zu Beginn der Verlagerung zwischen der ersten Drehposition und der zweiten Drehposition der Platzbedarf für das Wenden des medizinischen Behälters noch relativ gering ist, kann das Wenden bereits beginnen, wenn das Wendeelement und ein angrenzendes Wendeelement noch nebeneinander angeordnet sind. Erst bei der Hälfte des Wendeprozesses (d. h. bei ungefähr 90°) ist der Platzbedarf maximal, sodass erst zu diesem Zeitpunkt sichergestellt sein muss, dass sich das Wendeelement in der zweiten Position befindet. Dadurch kann der Prozess weiter beschleunigt werden und die Umlaufzeiten verringert werden. Mit anderen Worten kann die Kapazität des Gesamtsystems erhöht werden.

Optional ist das Halteelement dazu ausgestaltet, in der zweiten Position des Wendeelements, den an dem Halteelement gehaltenen medizinischen Behälter zwischen der ersten Drehposition und der zweiten Drehposition zu verlagern. Bei einer besonders engen Anordnung oder bei besonders großen medizinischen Behältern ist es jedoch dennoch vorteilhaft, die Verlagerung des medizinischen Behälters erst in der zweiten Position zu beginnen. Mit anderen Worten kann hierbei eine Verlagerung des medizinischen Behälters zwischen der ersten Drehpositionen und der zweiten Drehposition erst dann beginnen, wenn sich das Wendeelement in der zweiten Position befindet. Dadurch kann bei besonders großen oder besonders ausgeformten medizinischen Behältern sichergestellt sein, dass es nicht zu Kontakten mit anderen Elementen kommt.

Optional ist das Halteelement dazu ausgestaltet, abhängig von der zweiten Steuerkurve, den an dem Halteelement gehaltenen Behälter um eine zweite Achse zu drehen. Dadurch kann die Ausrichtung des medizinischen Behälters geändert werden, indem der medizinische Behälter um die zweite Achse gedreht wird. Die zweite Achse kann hierbei orthogonal zu der ersten Achse, um welche das Basiselement rotiert, gedreht werden.

Optional ist das Halteelement dazu ausgestaltet, eine translatorische Bewegung in eine rotatorische Bewegung zwischen der ersten Drehposition und der zweiten Drehposition umzuwandeln. Genauer gesagt kann das zweite Kontaktelement eine translatorische Bewegung als Steuerbefehl aufnehmen, wobei das Halteelement diese translatorische Bewegung in eine rotatorische Bewegung umwandeln kann, um den medizinischen Behälter von der ersten Drehposition in die zweite Drehposition zu überführen. Die translatorische Bewegung kann entlang der zweiten Achse erfolgen. Dadurch ist eine einfache Steuerung der Drehung des medizinischen Behälters steuerbar durch eine Steuerkurve ( zum Beispiel der zweiten Steuerkurve) ermöglicht.

Optional wird die translatorische Bewegung von dem zweiten Kontaktelement in Abhängigkeit der zweiten Steuerkurve initiiert. Mit anderen Worten kann das zweite Kontaktelement durch die zweite Steuerkurve so ausgelenkt werden, dass eine translatorische Bewegung in das Wendeelement hinein eingegeben wird, und durch das Wendeelement in eine rotatorische Bewegung umgesetzt wird.

Optional weist das Halteelemente einen Haltebereich auf, der dazu ausgestaltet ist, den medizinischen Behälter zu halten und mit dem medizinischen Behälter in direkten Kontakt zu gelangen. Der Haltebereich kann ein Endeffektor des Wendeelements sein. Der Haltebereich kann derjenige Bereich sein, der den medizinischen Behälter direkt kontaktiert.

Optional ist der Haltebereich als ein Saugnapf ausgestaltet. Dadurch können Ungenauigkeiten bei der Übergabe durch einen elastischen Saugnapf ausgeglichen werden. Dadurch kann der medizinische Behälter besonders schonend gehandhabt werden.

Wobei das Halteelement eine Vakuumdurchführung aufweist, um den medizinischen Behälter an dem Haltebereich des Halteelements zu halten. Die Vakuumdurchführung verläuft entlang der zweiten Achse. Die Vakuumdurchführung kann dafür sorgen, dass ein Unterdruck an dem Haltebereich anlegbar ist, obwohl der Haltebereich zwischen der ersten Drehposition und der zweiten Drehposition verlagerbar ist. Dadurch ist eine kontinuierliche Bereitstellung von Unterdruck an dem Halteelemente bzw. Haltebereich ermöglicht.

Optional umfasst das Halteelement einen Hebelmechanismus, der das zweite Kontaktelement mit dem Haltebereich verbindet. Dadurch kann die translatorische Bewegung, welche durch das zweite Kontaktelement in das Halteelement eingebracht wird, verstärkt werden, sodass eine relativ geringe Auslenkung des zweiten Kontaktelements ausreicht, um eine verhältnismäßig größere translatorische Bewegung zu erzeugen. Dadurch können die Bewegungen des zweiten Kontaktelements gering gehalten werden, und dennoch eine ausreichende Steuerbewegung in das Wendeelement eingegeben werden, um die Drehung des medizinischen Behälters zwischen der ersten Drehposition und der zweiten Drehposition zu initiieren.

Optional kann das zweite Kontaktelement eine Spindelmutter betätigen. Durch die Betätigung der Spindelmutter kann eine zugeordnete Spindel in Rotation versetzt werden. Diese Rotation kann den Haltebereich zwischen der ersten Drehposition und der zweiten Drehpositionsrotor rotatorisch verlagern. Die Spindelmutter kann durch das zweite Kontaktelement direkt oder über einen Hebelmechanismus betätigt werden. Dadurch kann die translatorische Bewegung zuverlässig in eine rotatorische Bewegung umgesetzt werden. Daher kann die Spindel auch als Linearantrieb bezeichnet werden. Die Vorschubgeschwindigkeit v_{f} ergibt die Drehzahl der Spindel abhängig von der Gewindesteigung. Mit anderen Worten kann mit der Gleichung v_{f} = n*P der jeweils gewünschte Wert berechnet werden. Hierbei ist n die Drehzahl der Spindelwelle und P die Gewindesteigung. Im vorliegenden Fall ist die Gewindesteigung optional 40 mm bis 50 mm bei 10 mm Durchmesser. Hierbei hat sich herausgestellt, dass die optimalen Ergebnisse bei einer Wendung des medizinischen Behälters um 180° bei gleichzeitig minimalem Verschleiß liefert.

Optional wird die Spindelmutter von vertikal oben betätigt. Hierbei wurde herausgefunden, dass eine gravitationsunterstützte Betätigung den Verschleiß des Gesamtsystems verringern kann.

Optional weist das Wendeelement ein Betätigungselement auf, an dessen einem Ende das zweite Kontaktelement angeordnet ist, und an dessen zweitem Ende die Spindelmutter vorgesehen ist. Optional ist das zweite Kontaktelement und die Spindelmutter starr miteinander verbunden. Mit anderen Worten kann eine Übersetzung einer Auslenkung des zweiten Kontaktelements direkt in eine translatorische Bewegung der Spindelmutter übersetzt werden. Die Spindelmutter kann dann wiederum die Spindel rotatorisch betätigen. Somit ist das Betätigungselement Optional zwischen einer ersten Betätigungselementposition und einer zweiten Betätigungselementposition verlagerbar. Die erste Betätigungselementposition ist dabei realisiert, wenn sich der medizinische Behälter, welcher an dem Halteelemente gehalten ist, sich in der ersten Drehposition befindet. Analog dazu befindet sich das Betätigungselement in der zweiten Betätigungselementposition zurückführt, wenn der an dem Halteelemente gehaltene medizinischen Behälter sich in der zweiten Drehposition befindet. Optional weist das Betätigungselement einen Rastmechanismus auf, der dazu ausgestaltet ist, dass Betätigungselement in der ersten Betätigungselementposition zu fixieren. Ferner kann das Rastelement dazu ausgestaltet sein, dass Betätigungselement in der zweiten Betätigungselementposition zu fixieren. Fixieren kann hierbei bedeuten, dass das Betätigungselement in der jeweiligen Position so gehalten ist, dass es von selbst diese Position nicht verlässt. Mit anderen Worten kann das Betätigungselement aus der ersten Betätigungselementposition und/oder aus der zweiten Betätigungselementposition nur dann verlagert werden, wenn eine von außen angelegte Kraft auf das Betätigungselement wirkt. Eine Verlagerung zwischen der ersten Betätigungselementposition (d. h. von der ersten Drehposition) in die zweite Betätigungselement Position (d. h. in die zweite Drehposition), kann beispielsweise durch die zweite Steuerkurve über das zweite Kontaktelement initiiert werden. Ist das Betätigungselement dann in der zweiten Betätigungselementposition angelangt, kehrt das Betätigungselement nicht von selbst in die erste Betätigungselementposition zurück. Damit kann der medizinische Behälter, wenn diese einmal die zweite Drehposition eingenommen hat, diese beibehalten. Dies ist darum wichtig, weil bei einer Wendung des medizinischen Behälters an dem Wendestern es nicht gewünscht ist, dass nach einer Wendung der medizinische Behälter direkt wieder zurückgewendet wird. Vielmehr ist es wünschenswert, dass der medizinische Behälter in der gewendeten Position aus dem Wendestern ausgegeben wird. Die Initiierung einer Bewegung des Halteelements von der zweiten Halteelementposition zurück in die erste Halteelementposition kann beispielsweise durch das zweite Kontaktelement erfolgen. Ferner kann auch ein weiteres Betätigungselement vorgesehen sein, welches aktiv oder passiv das Betätigungselement von der zweiten Betätigungselementposition in die erste Betätigungselementposition zurückführt. Beispielsweise kann dies ein Anschlag sein, welcher bei der Drehung des Basiselements um die erste Achse kontaktiert wird. Optional erfolgt die Verlagerung des Betätigungselements zurück in die erste Betätigungselementposition in einer Situation, in der an dem Halteelement kein medizinische Behälter gehalten ist. Mit anderen Worten kann der medizinische Behälter an einer Eingangsposition dem Wendestern zugeführt werden, dann bei einer weiteren Verlagerung des Wendesterns um die erste Achse gewendet werden und an eine Ausgabeposition ausgegeben werden. Bewegt sich der Wendestern zwischen der Ausgabeposition und der Eingabeposition, kann das Betätigungselement zwischen der zweiten Betätigungsposition und der ersten Bestätigungsposition verlagert werden. Damit wird der alte Bereich wieder in die erste Drehposition verlagert, sodass ein neuer medizinischer Behälter aufgenommen werden kann, um gewendet zu werden.

Optional umfasst das Halteelement einen Hebelmechanismus oder einen Antriebsmechanismus, der das zweite Kontaktelement mit dem Halteelement verbindet. Mit anderen Worten kann das zweite Kontaktelement indirekt mit dem Halteelement verbunden sein. Durch den Hebelmechanismus kann ein zu dem zweiten Kontaktelement eingegebener Steuerbefehl angepasst werden, um eine entsprechende Bewegung des Halteelements zu bewirken. Dadurch kann das Gesamtsystem kompakter ausgestaltet werden. Durch den Antriebsmechanismus kann ein Steuerbefehl so wie er in das Wendeelement eingegeben wird auch zu dem Halteelement weitergegeben werden. Dadurch kann eine direkte Steuerung des Halteelements durch die Steuerkurve erreicht werden.

Optional sind die Wendeelemente ausschließlich zwischen der ersten Position und der zweiten Position und/oder zwischen der ersten Drehposition und der zweiten Drehposition verlagerbar. Mit anderen Worten können die Wendeelemente nicht anders relativ zu dem Basiselement bewegt werden als translatorisch und/oder rotatorisch. Somit können die Wendeelemente beispielsweise nicht gekippt werden. Dies liefert den Effekt, dass mehr Wendeelemente an dem Basiselement angeordnet werden könnten. Dadurch können medizinische Behälter zuverlässig und schnell, insbesondere für eine Inspektion, gewendet werden. Ferner kann ein Abstand der Wendemodule entlang einer Umfangsrichtung stets gleich bleiben. Damit können die Wendemodule in der Umfangsrichtung direkt aneinander (d.h. mit einem geringen bzw. keinem Abstand zueinander) angeordnet werden. Dadurch kann eine hohe Anzahl an Wendemodulen an dem Basiselement angeordnet sein. Folglich kann die Geschwindigkeit, mit der dich medizinischen Behälter gewendet werden gesteigert sein.

Gemäß einem weiteren Aspekt der vorliegenden Offenbarung wird ein Verfahren zum Wenden von medizinischen Behältern bereitgestellt. Das Verfahren kann ein Halten eines medizinischen Behälters an einem Halteelement eines Wendeelements umfassen. Ferner kann das Verfahren ein Bewegen des Wendeelements von einer ersten Position in eine zweite Position umfassen. Zudem kann das Verfahren ein Wenden des von dem Halteelemente gehaltenen medizinischen Behälters von einer ersten Drehposition in eine zweite Drehposition umfassen, wenn das Wendeelement sich von der ersten Position in die zweite Position bewegt oder in der zweiten Position ist. Das Verfahren kann ein Bewegen des Wendeelements von der zweiten Position in die erste Position umfassen.

Damit kann ein Verfahren zum Wenden eines medizinischen Behälters bereitgestellt seien, bei dem die Wendeelemente eng aneinander angrenzenden vorgesehen sein können. Der nötige Platz zum Wenden des medizinischen Behälters kann durch die Verlagerung zwischen der ersten Position und der zweiten Position des Wendeelements bereitgestellt sein.

Gemäß einem weiteren Aspekt der vorliegenden Offenbarung wird eine Verwendung des obigen Wendesterns zum Wenden von medizinischen Behältern bereitgestellt.

Ausführungsformen und einzelne Merkmale der obigen Offenbarung können miteinander kombiniert werden und somit neue Ausführungsformen bilden. Vorteile und Ausgestaltungen, die in Zusammenhang mit den Ausführungsformen oder den Merkmalen genannt sind, gelten analog auch für die neuen Ausführungsformen. Ausgestaltungen und Vorteile, die in Verbindung mit der Vorrichtung genannt sind, gelten analog auch für das Verfahren und andersherum.

Im Folgenden wird die vorliegende Offenbarung mit Bezug auf die beigefügten Figuren im Detail beschrieben.
- **Fig. 1**: ist eine schematische und perspektivische Ansicht eines Wendesterns gemäß einer Ausführungsform der vorliegenden Offenbarung.
- **Fig. 2**: ist eine schematische Draufsicht auf einen Wendestern gemäß einer Ausführungsform der vorliegenden Offenbarung.
- **Fig. 3**: ist eine schematische Draufsicht auf einen Wendestern gemäß einer Ausführungsform der vorliegenden Offenbarung.
- **Fig. 4**: ist eine schematische und perspektivische Ansicht eines Wendesterns gemäß einer Ausführungsform der vorliegenden Offenbarung.
- **Fig. 5**: ist eine schematische Seitenansicht eines Wendesterns gemäß einer Ausführungsform der vorliegenden Offenbarung.
- **Fig. 6**: ist eine schematische Teilansicht eines Wendesterns gemäß einer Ausführungsform der vorliegenden Offenbarung.
- **Fig. 7**: ist eine schematische Ansicht eines Wendeelements gemäß einer Ausführungsform der vorliegenden Offenbarung.
- **Fig. 8**: ist eine schematische Schnittansicht eines Wendeelements gemäß einer Ausführungsform der vorliegenden Offenbarung.
- **Fig. 9**: ist eine schematische und perspektivische Ansicht eines Wendeelements gemäß einer Ausführungsform der vorliegenden Offenbarung.
- **Fig. 10**: ist eine schematische Schnittansicht eines Wendeelements gemäß einer Ausführungsform der vorliegenden Offenbarung.
- **Fig. 11**: ist ein schematisches Ablaufdiagramm eines Verfahrens gemäß einer Ausführungsform der vorliegenden Offenbarung.

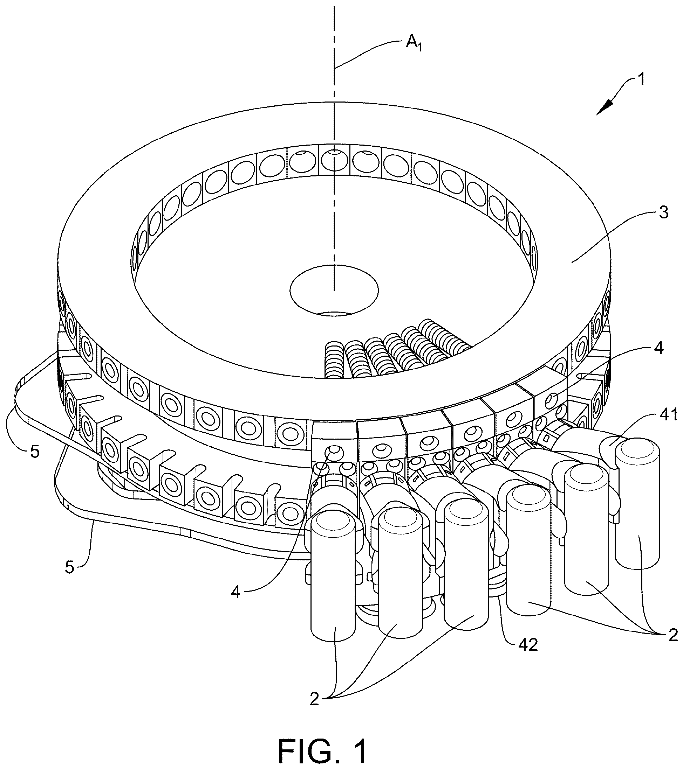

**Fig. 1** zeigt schematisch und perspektivisch einen Wendestern 1 gemäß einer Ausführungsform der vorliegenden Offenbarung. Der Wendestern 1 weist in der vorliegenden Ausführungsform ein im Wesentlichen kreisrundes Basiselement 3 auf. Das Basiselement 3 ist um eine erste Achse A1 drehbar ausgestaltet. An dem Außenumfang des Basiselements, welches als Zylinder ausgestaltet ist, sind eine Vielzahl von Wendeelementen 4 aneinander angrenzend angeordnet. In Fig. 1 sind lediglich 6 Wendeelemente 4 dargestellt, jedoch kann der vollständige Außenumfang des Basiselements 3 mit Wendeelementen 4 versehen sein. Jedes Wendeelement 4 weist ein Halteelement 41 auf, an dem jeweils ein medizinischer Behälter 2 gehalten sein kann. In der in Fig. 1 dargestellten Ausführungsform sind an den sechs dargestellten Wendeelementen 4 jeweils ein medizinischer Behälter 2 gehalten. In der Schwererrichtung, welche parallel zu der ersten Achse A1 verläuft, sind unterhalb des Basiselements 3 mehrere Steuerkurven 5, 6 angeordnet. Genauer gesagt sind zwei erste Steuerkurven 5 vorgesehen, die mit einem ersten Kontaktelement 42, welches an jedem der Wendeelemente 4 vorgesehen ist, in Kontakt ist. Der Kontakt kann hierbei kontinuierlich oder nur zeitweise vorliegen. Jedenfalls kann die erste Steuerkurve 5 das erste Kontaktelement 42 kontaktieren, um einen Steuerbefehl an das Wendeelement 4 zu übermitteln.

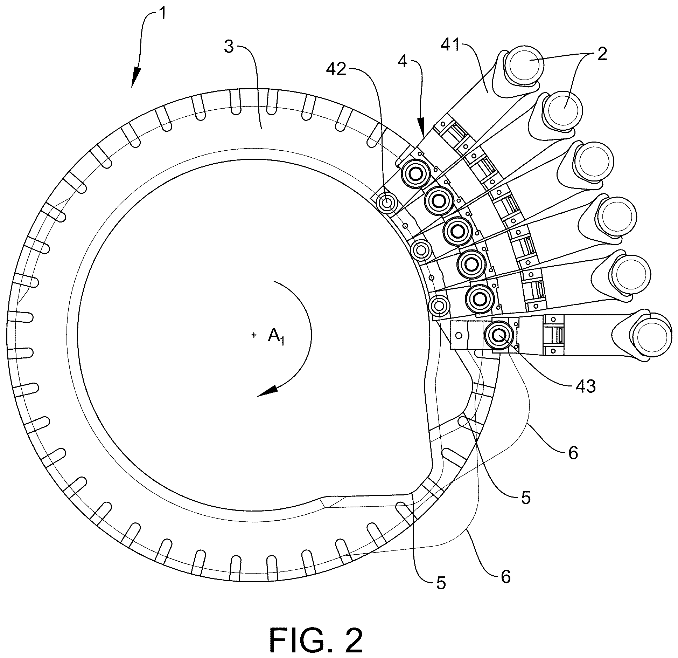

**Fig. 2** ist eine schematische Draufsicht auf den Wendestern 1 aus Fig. 1. Im Unterschied zu Fig. 1 ist das Basiselement 3 in Fig. 2 weiter um die erste Achse A1 herumgedreht (siehe Pfeil in Fig. 2). In der Draufsicht ist zu erkennen, dass jedes Wendeelement 4 ein erstes Kontaktelement 42 und ein zweites Kontaktelement 43 aufweist. Das erste Kontaktelement 42 ist mit der ersten Steuerkurve 5 in Kontakt, wohingegen des zweite Kontaktelement 43 mit der zweiten Steuerkurve 6 Kontakt ist. Das jeweilige Kontaktelement kann hierbei ausschließlich mit einer Steuerkurve in Kontakt sein. Bei der vorliegenden Ausführungsform sind jeweils zwei erste Steuerkurven und jeweils zwei zweite Steuerkurven versetzt zueinander vorgesehen. Die Steuerkurven 5,6 können also Steuersignale an das erste Kontaktelement 42 und das zweite Kontaktelement 43 übermitteln. Das erste Kontaktelement 42 kann den Steuerbefehl aufnehmen, so dass sich das Wendeelement 4 radial nach außen weg von dem Basiselement 3 bewegt. Das zweite Kontaktelement 43 kann den Steuerbefehl entgegennehmen, so dass sich das Halteelement 41, welches den medizinischen Behälter 2 hält, so dreht, dass der medizinische Behälter gewendet wird.

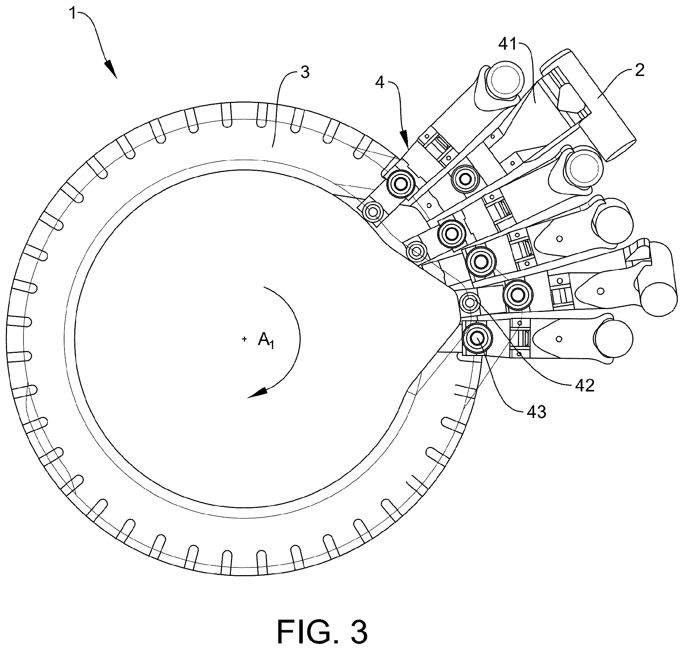

**Fig. 3** ist eine schematische Draufsicht auf den Wendestern 1, der in Fig. 2 dargestellt ist, mit dem Unterschied, dass das Basiselement 3 weiter in der Pfeilrichtung rotiert wurde. Nun sind die ersten Steuerkurven 5 und die zweiten Steuerkurven 6 so in Kontakt mit den ersten Kontaktelementen 42 und den zweiten Kontaktelementen 43 der sechs dargestellten Wendeelementen 4, dass sich einige Wendeelemente 4 von dem Basiselement 3 wegbewegt haben (Steuerbefehl, der über das erste Kontaktelement 42 eingegeben wird) und zum Teil die medizinischen Behälter 2 gewendet werden (Steuerbefehl, der über das zweite Kontaktelement 43 eingegeben wird). Durch die kontinuierliche Bewegung des Basiselements 3 relativ zu den vorhandenen Steuerkurven 5,6, kann so eine einfache Steuerung erzielt werden, die für eine nahtlose und problemlose Wendung der medizinischen Behälter 2 sorgt. Zu erkennen ist, dass allein durch das radiale nach außen Bewegen der Wendeelemente 4, der Platz geschaffen wird, um den medizinischen Behälter zu wenden. In der Konfiguration, wie sie in Fig. 2 dargestellt ist, wäre ein Wenden der medizinischen Behälter nicht möglich, da die medizinischen Behälter 2 mit angrenzenden Wendeelementen 4 oder angrenzenden medizinischen Behältern 2 in Kontakt gelangen würden.

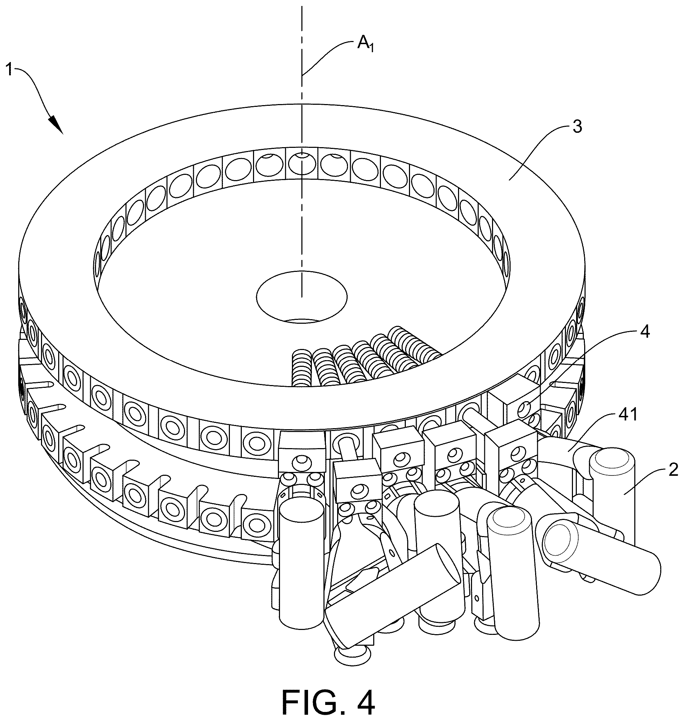

**Fig. 4** ist eine schematische und perspektivische Ansicht eines Wendesterns 1 gemäß der in den vorigen Figuren dargestellten Ausführungsform. Zu erkennen ist, dass aneinander angrenzende Wendeelemente 4 in unterschiedlichen Positionen relativ zu daran angrenzenden Wendeelementen positioniert sind. Ferner sind Halteelemente 41 der jeweiligen Wendeelemente 4 so gedreht, dass der zur Verfügung stehende Platz optimal genutzt wird, um den medizinischen Behälter 2, welcher an einem Halteelement 41 gehalten ist, zu wenden. Das in Fig. 4 dargestellte Szenario ist lediglich ein Beispiel und jegliche aufeinander abgestimmte Bewegungsmuster sind möglich, solange ausreichend Platz geschaffen ist, um den jeweiligen medizinischen Behälter 2 zu wenden. Diese Konfiguration kann durch Anordnen und Ausgestalten der Steuerkurven 5, 6 realisiert sein. Bei der vorliegenden Ausführungsform werden die medizinischen Behälter 2 um im Wesentlichen 180° gedreht, um eine Inspektion des Bodenbereichs realisieren zu können.

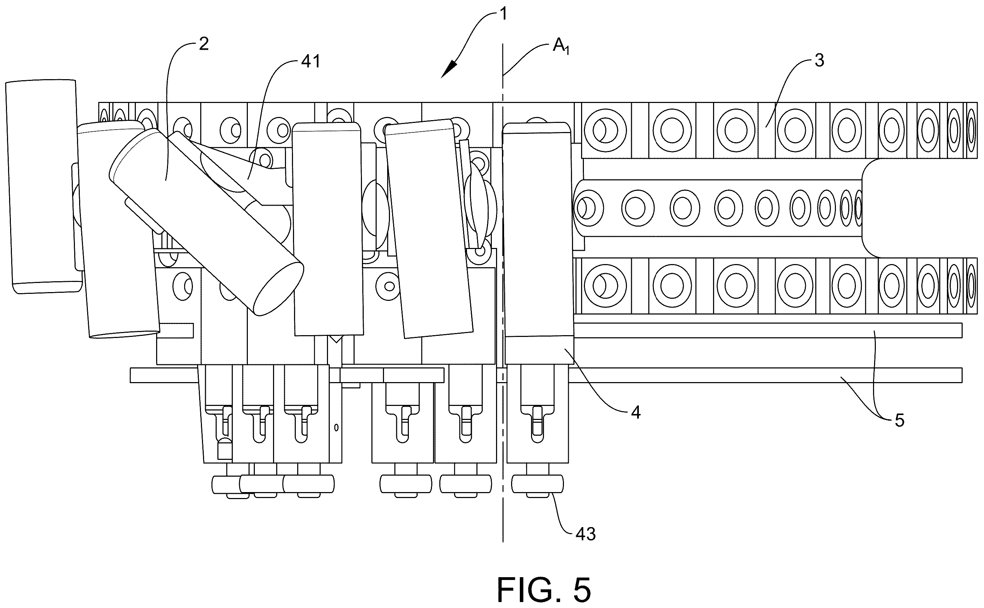

**Fig. 5** ist eine schematische Seitenansicht eines Wendesterns 1 gemäß der in den vorherigen Figuren dargestellten Ausführungsformen. In Fig. 5 ist dargestellt, wie die Steuerkurven 5,6 vorgesehen sind. In Fig. 5 sind lediglich die beiden ersten Steuerkurven 5 dargestellt. Die ersten Steuerkurven 5 sind mit dem ersten Kontaktelement 42 (in Fig. 5 nicht erkennbar) in Kontakt. Die zweiten Steuerkurven 6 (in Fig. 5 nicht dargestellt) sind beabstandet von der ersten Steuerkurven vorgesehen und können mit dem zweiten Kontaktelement 43 jedes Wendeelements 4 in Kontakt gelangen. Mit anderen Worten können das erste Kontaktelement 42 und das zweite Kontaktelement 43 auf unterschiedlichen Höhenpositionen in der Schwererrichtung angeordnet sein. Dadurch kann auf einfache Art und Weise definiert werden mit welcher Steuerkurve das jeweilige Kontaktelement in Kontakt gelangen soll. Ferner ist denkbar, dass die Kontaktelemente 42, 43 an einem Wendeelement lösbar befestigt sind, so dass diese einfach umgesteckt oder unplatziert werden können, um zu definieren mit welcher Steuerkurve das jeweilige Kontaktelement in Kontakt gelangen soll. Damit kann der Wendestern problemlos individuell angepasst werden.

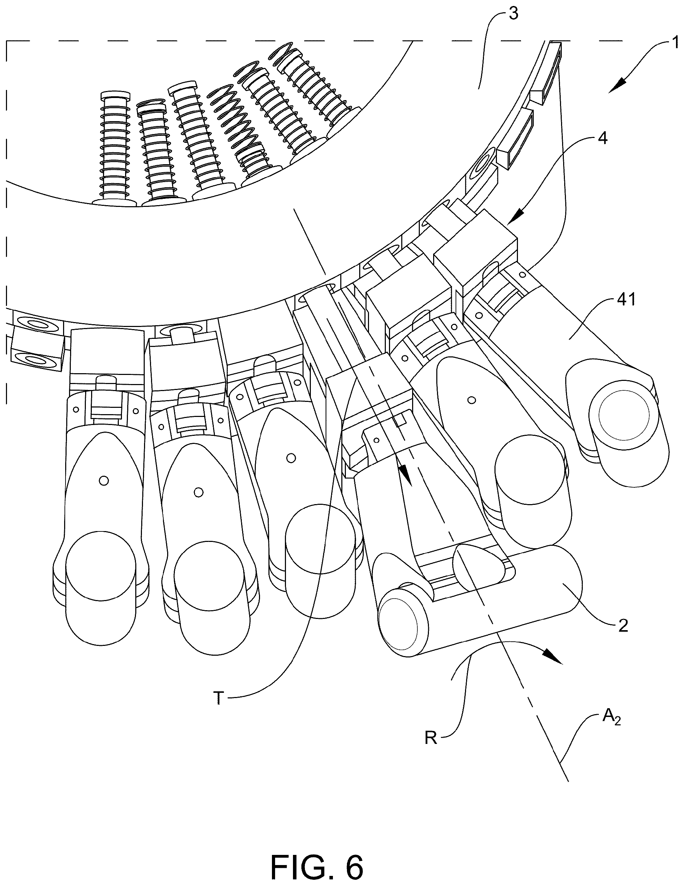

**Fig. 6** ist eine schematische und perspektivische Teilansicht eines Wendesterns 1, wie er in den vorigen Figuren dargestellt ist. In Fig. 6 sind die beiden unterschiedlichen Bewegungen gekennzeichnet, nämlich die translatorische Bewegung T, welche das Wendeelement von dem Basiselement 3 wegbewegt (bei der vorliegenden Ausführungsform radial nach Außen), und die rotatorische Bewegung R, welche den medizinischen Behälter 2 um eine zweite Achse A2 wendet. Die zweite Achse A2 steht hierbei orthogonal zu der ersten Achse A1.

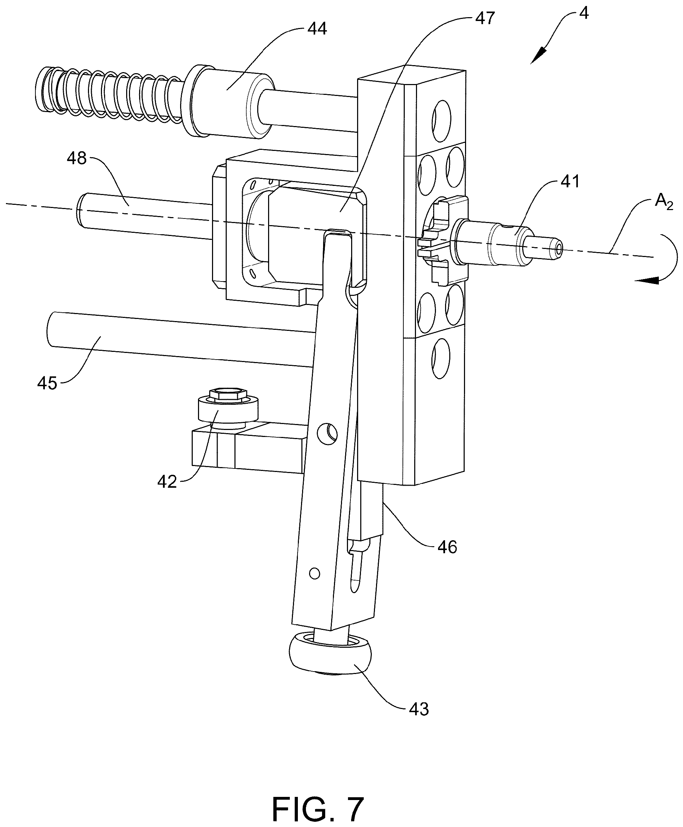

Fig. 7 ist eine schematische perspektivische Darstellung eines Wendeelements 4 gemäß einer Ausführungsform der vorliegenden Offenbarung. Das Wendeelement 4 weist, wie bereits oben beschrieben, ein erstes Kontaktelement 42 und ein zweites Kontaktelement 43 auf. Beide Kontaktelemente 42, 43 sind als Rollenelemente ausgestaltet, um den Verschleiß bei einem Kontakt mit den Steuerkurven 5, 6 zu minimieren. Das erste Kontaktelement 42 ist hierbei für eine Verlagerung zwischen der ersten Position (wie sie in Fig. 1 bei den Wendeelementen dargestellt ist) und einer zweiten Positionsklammer (wie sie teilweise bei den Kontaktelemente Fig. 3 dargestellt ist) zu bewerkstelligen. Das zweite Kontaktelement 43 ist demgegenüber dafür da, ein Halteelemente 4 um die zweite Achse A2 zu wenden. Dabei wird das zweite Kontaktelement 43 ausgelenkt, wodurch ein Hebelmechanismus 46 betätigt wird, der wiederum eine Spindelmutter 47 verlagert, wodurch eine Spindel 48 gedreht wird. Die Drehung der Spindel 48 um die zweite Achse herum (siehe Pfeil in Fig. 7) löst dann das wenden des an dem Haltemechanismus (in Fig. 7 nicht vollständig dargestellt) festgelegten medizinischen Behälters 2 aus. Ferner ist eine Führungselement 45 vorgesehen, dass das Wendeelement (4) bei einer Verlagerung zwischen der ersten Position und der zweiten Position führen kann. Das Führungselement 45 ist bei der vorliegenden Ausführungsform als ein stangenartiges Element ausgebildet, das fest mit dem Halteelement 4 verbunden ist und beweglich relativ zu dem Basiselement vorgesehen ist. Somit kann ein ungewolltes Kippen des Halteelements relativ zu dem Basiselement verhindert werden. Genauer gesagt kann das Führungselement 45 in dem Basiselement geführt gelagert sein.

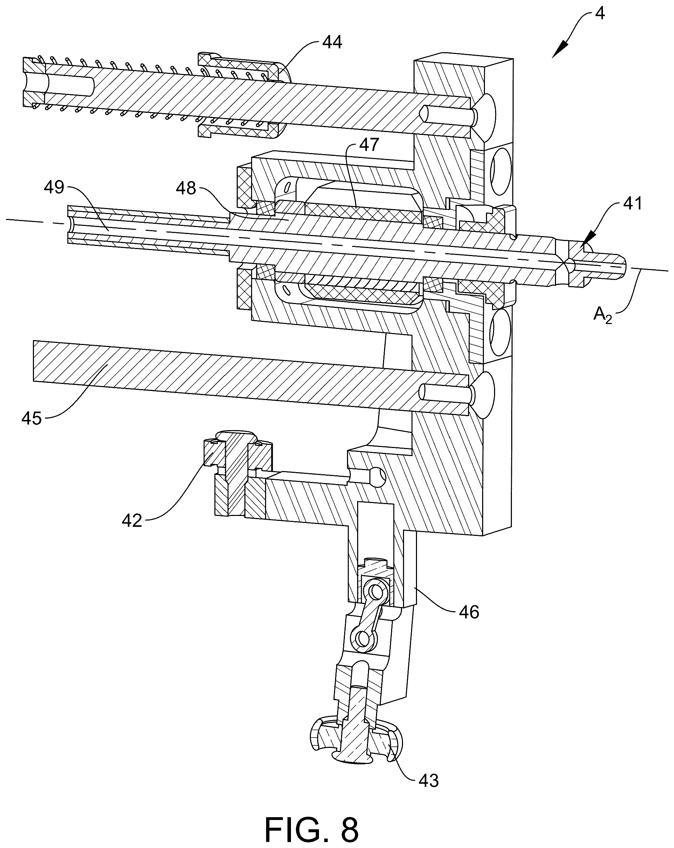

**Fig. 8** ist eine schematische und perspektivische Schnittansicht des Wendeelements 4 aus Fig. 7. Zusätzlich zu Fig. 7 ist in Fig. 8 die Vakuumdurchführung 49 dargestellt, die dazu ausgestaltet ist, einen Unterdruck zu dem Halteelement 41 zu transportieren. Damit kann der Unterdruck selbst durch das Wendeelement 4 (d.h. von einem feststehenden Körper zu einem sich mitrotierenden Körper) zu dem Halteelemente 41 transportiert werden, obwohl das Halteelement um die zweite Achse A2 herum drehbar ist. Ferner ist der Hebelmechanismus zur Betätigung der Spindelmutter 47 im Detail dargestellt. Hierbei gibt es einen Führungskolben, der die Verlagerung führt. Dadurch kann verhindert werden, dass es zu Verkantungen oder ungewollten Verlagerungen und damit zu Ablösungen des zweiten Kontaktelements 43 von der zweiten Steuerkurve 6 kommt.

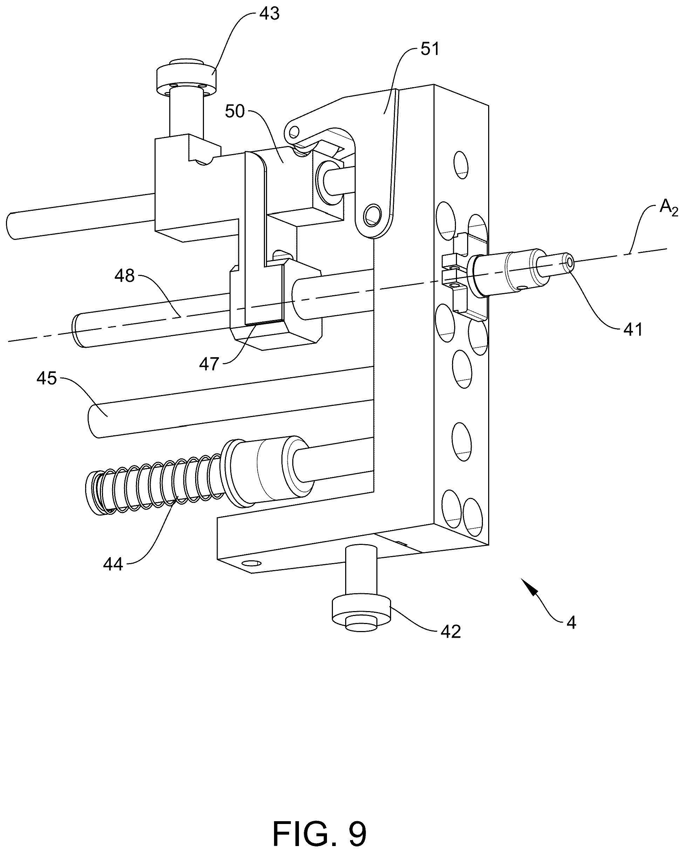

**Fig. 9** ist eine schematische und perspektivische Ansicht eines Wendeelements 4 gemäß einer anderen Ausführungsform der vorliegenden Offenbarung. Bei der vorliegenden Ausführungsform ist das erste Kontaktelement 42 oberhalb (in der Schwererichtung) des Wendeelements 4 angeordnet. Das zweite Kontaktelement 43 ist nach wie vor an einem unteren Ende des Wendeelements 4 vorgesehen. Die Spindelmutter 47 wird bei der vorliegenden Ausführungsform nicht über einen Hebelmechanismus betätigt, sondern über einen linearen Antriebsmechanismus oder Verlagerungsmechanismus 50. Mit anderen Worten wird das zweite Kontaktelement 43 durch die zweite Steuerkurve 6 ausgelenkt, wodurch sich das zweite Kontaktelement 43 translatorisch verlagert. Dadurch wird der Verlagerungsmechanismus 50 ebenfalls translatorisch verlagert und dadurch die Spindelmutter 7 ebenfalls verlagert. Durch die Verlagerung der Spindelmutter 47 wird die Spindel in Drehung versetzt und dreht das Halteelement 41 (in Fig. 9 nicht vollständig dargestellt) um die zweite Achse A2. Ferner ist in Fig. 9 ein Rastmechanismus 51 dargestellt, der in der Lage ist, den Verlagerungsmechanismus 50 in der ersten Position oder der zweiten Position zu fixieren. Dafür weist der Rastmechanismus 51 zwei Vertiefungen auf, die jeweils an einem Ende der Übertragungseinheit 50 angeordnet ist. In der ersten Position ist das Rastelement also in der ersten Vertiefung angeordnet, sodass eine ungewollte Verlagerung vermieden ist. Wird dann das zweite Kontaktelement 43 durch die zweite Steuerkurve 6 betätigt, wird das Rastelement 51 in die andere Vertiefung verlagert und bleibt dort wieder stehen. Mit anderen Worten befindet sich nun das Rastelement so, dass der medizinischen Behälter der zweiten Drehposition gehalten ist. Durch den Rastmechanismus 51 kann der medizinische Behälter 2 solange in der zweiten Drehposition gehalten werden, bis diese aus dem Wendestern 1 abgegeben wird. Durch eine Verlagerung des Rastmechanismus zurück in die erste Drehposition, kann das jeweilige Wendeelement 4 wieder bereit gemacht werden, um einen neuen medizinischen Behälter aufzunehmen. Diese Betätigung zum Zurückkehren in die erste Drehposition kann wiederum durch eine Verlagerung des zweiten Kontaktelements 43 realisiert sein. Beispielsweise kann hierbei ein Kontaktelement vorgesehen sein, welches das zweite Kontaktelement wieder zurück in die erste Drehposition überführt.

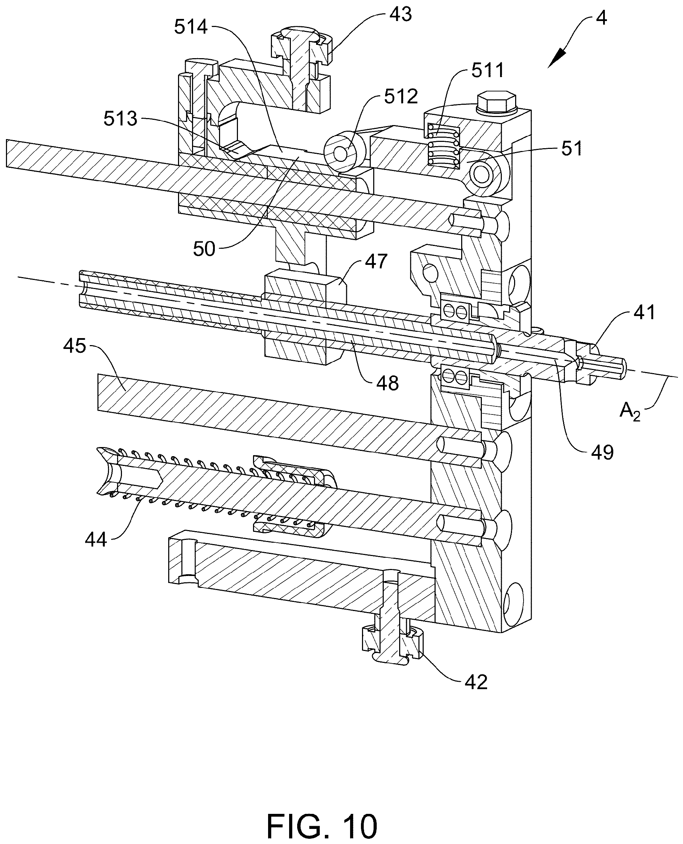

**Fig. 10** ist eine schematische und perspektivische Schnittansicht des Wendeelements 4 aus Fig. 9. In Fig. 10 ist die Vakuumdurchführtung 49 zu erkennen, welche dazu ausgestaltet ist, ein Vakuum entlang der Achse A2 zu führen. Ferner ist das Rastelement 51 im Detail dargestellt. Das Rastelement 51 weist ein Spannelement 511 (bei dieser Ausführungsform als eine Feder ausgestaltet) auf. Das Spannelement ist dazu ausgestaltet, dass ein Gleitelement 512 des Rastelements 51 auf einer Kontaktfläche 514 aufliegt und insbesondere daran angedrückt wird. Somit wird ein Kontakt zwischen Gleitelement 512 und Kontaktfläche 514 sichergestellt. Das Gleitelement 514 ist bei der vorliegenden Ausführungsform als eine Rolle ausgestaltet. Die Kontaktfläche 514 weist eine erste Vertiefung 513 und eine zweite Vertiefung 515 auf, in die das Gleitelement 512 eingreifen kann. Somit kann das Gleitelement 512 in zwei unterschiedlichen Positionen formschlüssig festgelegt werden. Die eine Position entspricht der ersten Drehposition, wohingegen die andere Position der zweiten Drehposition entspricht. Dadurch kann die jeweilige Drehposition festgelegt definiert und gesichert werden gegen unabsichtliche Verlagerung.

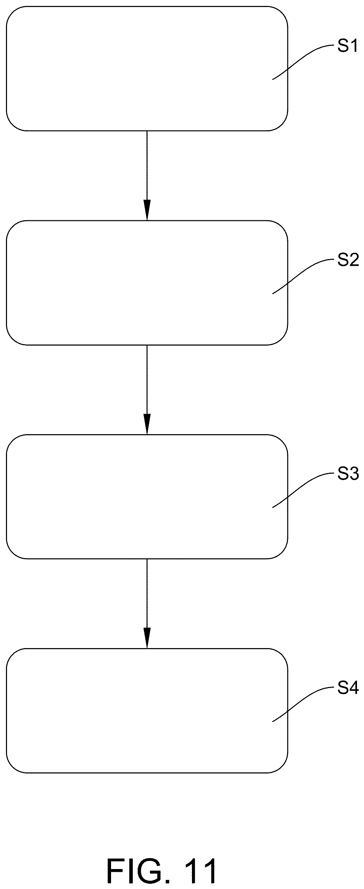

**Fig. 11** ist ein schematisches Ablaufdiagramm, welches schematisch den Ablauf eines Verfahrens zum Wenden von medizinischen Behältern darstellt. Zuerst wird in Schritt S1 ein medizinische Behälter 2 an einem Halteelemente 4 eines Wendeelements 1 gehalten. Dann wird in Schritt S2 das Wendeelement 4 von einer ersten Position in eine zweite Position überführt. Mit anderen Worten kann das Wendeelement 4 von einem Basiselement des Wendesterns entfernt werden. Anschließend wird in Schritt S3 der von einem Halteelement 41 gehaltene medizinische Behälter 2 von einer ersten Drehposition in eine zweite Drehposition überführt, wenn das Wendeelement 4 sich von der ersten Position in die zweite Position bewegt oder in der zweiten Position angeordnet ist. Dadurch kann der medizinische Behälter dann gewendet werden, wenn dafür ausreichend Platz da ist. In Schritt S4 wird das Wendeelement 4 von der zweiten Position in die erste Position zurückgeführt. Damit kann das Wendeelement zusammen mit dem daran gehaltenen medizinischen Behälter in eine Position überführt werden, in der der medizinische Behälter problemlos von dem Wendestern 1 abgegeben werden kann. Optional wird solange der medizinische Behälter 2 an dem Wendeelement 4 gehalten ist, die zweite Drehposition beibehalten, ohne dass diese zurück in die erste Drehposition fällt. Dadurch kann sichergestellt sein, dass der medizinische Behälter in einer gewendeten Position abgegeben wird.

### Bezugszeichenliste:

- 1: Wendestern
- 2: medizinischer Behälter
- 3: Basiselement
- 4: Wendeelement
- 5: erste Steuerkurve
- 6: zweite Steuerkurve
- 41: Halteelement
- 42: erstes Kontaktelement
- 43: zweites Kontaktelement
- 44: Rückstellelement
- 45: Führungselement
- 47: Spindelmutter
- 48: Spindel
- 49: Vakuumdurchführung
- 50: Verlagerungsmechanismus
- 51: Rastmechanismus
- A2: zweite Achse
- A1: erste Achse

## Patentansprüche

1. Wendestern (1) zum Wenden von medizinischen Behältern (2), umfassend:
ein Basiselement (3), an dem eine Vielzahl von Wendeelementen (4) vorgesehen ist,
wobei jedes Wendeelement (4) umfasst:
ein Halteelement (41), das dazu ausgestaltet ist, einen medizinischen Behälter (2) zu halten und zu wenden,
ein erstes Kontaktelement (42), das dazu ausgestaltet ist, mit einer ersten Steuerkurve (5) in Kontakt zu gelangen,
wobei das Wendeelement (4) dazu ausgestaltet ist, sich abhängig von der ersten Steuerkurve (5) relativ zu dem Basiselement (3) zwischen einer ersten Position und einer zweiten Position zu verlagern.

2. Wendestern (1) gemäß Anspruch 1, wobei die Wendeelement (4) lösbar an dem Basiselement (3) gehalten sind.

3. Wendestern (1) gemäß Anspruch 1 oder 2, wobei die Verlagerung des Wendeelements (4) relativ zu dem Basiselement (3) erfolgt.

4. Wendestern (1) gemäß einem der vorhergehenden Ansprüche, wobei die zweite Position weiter von dem Basiselement (3) entfernt ist als die erste Position.

5. Wendestern (1) gemäß einem der vorhergehenden Ansprüche, wobei das Wendeelement (4) ein zweites Kontaktelement (43) aufweist, das dazu ausgestaltet ist, mit einer zweiten Steuerkurve (6) in Kontakt zu gelangen.

6. Wendestern (1) gemäß einem der vorhergehenden Ansprüche, wobei sich die erste Steuerkurve (5) von der zweiten Steuerkurve (6) hinsichtlich Anordnung und/oder Form unterscheidet.

7. Wendestern (1) gemäß einem der vorhergehenden Ansprüche, wobei das Halteelement (41) dazu ausgestaltet ist, einen an dem Halteelement (41) gehaltenen medizinischen Behälter (2) zwischen einer ersten Drehposition und einer zweiten Drehposition drehend zu verlagern.

8. Wendestern (1) gemäß einem der vorhergehenden Ansprüche, wobei das Halteelement (41) dazu ausgestaltet ist, während einer Verlagerung des Wendeelements (4) von der ersten Position in die zweiten Position, den an dem Halteelement (41) gehaltenen medizinischen Behälter (2) zwischen der ersten Drehposition und der zweiten Drehposition zu verlagern, oder wobei das Halteelement (41) dazu ausgestaltet ist, in der zweiten Position des Wendeelements (4), den an dem Halteelement (41) gehaltenen medizinischen Behälter (2) zwischen der ersten Drehposition und der zweiten Drehposition zu verlagern.

9. Wendestern (1) gemäß einem der vorhergehenden Ansprüche, wobei das Halteelement (41) dazu ausgestaltet ist, abhängig von der zweiten Steuerkurve (6), den an dem Halteelement (41) gehaltenen Behälter (2) um eine zweite Achse (A2) zu drehen.

10. Wendestern (1) gemäß einem der vorhergehenden Ansprüche, wobei das Halteelement (41) dazu ausgestaltet ist, eine translatorische Bewegung in eine rotatorische Bewegung zwischen der ersten Drehposition und der zweiten Drehposition umzuwandeln.

11. Wendestern (1) gemäß einem der vorhergehenden Ansprüche, wobei die translatorische Bewegung mittels eine Spindelmutter (47) und einer Spindel (48) in eine rotatorische Bewegung zwischen der ersten Drehposition und der zweiten Drehposition des Halteelements (41) umgewandelt wird.

12. Wendestern (1) gemäß einem der vorhergehenden Ansprüche, wobei das Halteelement (41) einen Hebelmechanismus (46) oder einen Antriebsmechanismus (50) umfasst, der das zweite Kontaktelement (43) mit dem Halteelement (41) verbindet.

13. Wendestern (1) gemäß einem der vorhergehenden Ansprüche, wobei das Wendeelement (4) ein Rückstellelement (44) aufweist, das dazu ausgestaltet ist, das Wendeelement (4) in die erste Position zu drängen.

14. Wendestern (1) gemäß einem der vorhergehenden Ansprüche, wobei die Wendeelemente (4) ausschließlich zwischen der ersten Position und der zweiten Position und/oder zwischen der ersten Drehposition und der zweiten Drehposition verlagerbar sind.

15. Verfahren zum Wenden von medizinischen Behältern (2), umfassend:
Halten eines medizinischen Behälters (2) an einem Halteelement (41) eines Wendeelements (4),
Bewegen des Wendeelements (4) von einer ersten Position in eine zweite Position,
Wenden des von dem Halteelement (41) gehaltenen medizinischen Behälters (2) von einer ersten Drehposition in eine zweite Drehposition, wenn das Wendeelement (4) sich von der ersten Position in die zweite Position bewegt oder in der zweiten Position ist, und
Bewegen des Wendeelements (4) von der zweiten Position in die erste Position.
